# FASCICULE DE BREVET EUROPEEN

(11) **EP 2 927 032 B1**
(45) Date de publication et mention de la délivrance du brevet: **13.06.2018**
(21) Numéro de dépôt: 15157881.2
(22) Date de dépôt: 05.03.2015
(51) Int. Cl.: B60H 1/00

(54) **Volet d'obturation pour extrémité de conduit d'air dans un système de chauffage ou de climatisation de véhicule automobile**
Verschlussklappe für Ausgang einer Luftleitung in einem Heiz- oder Klimatisierungssystem eines Kraftfahrzeugs
Shutter for the end of an air duct in a heating or air-conditioning system of a motor vehicle

(30) Priorité: 31.03.2014 FR 1452827
(43) Date de publication de la demande: 07.10.2015
(73) Titulaire: VALEO SYSTEMES THERMIQUES, 78320 Le Mesnil Saint-Denis (FR)
(72) Inventeur: Dubois, Christian, 78610 Le Perray En Yvelines (FR)
(74) Mandataire: Metz, Gaëlle

(56) Documents cités:
- EP-A1- 0 656 272
- FR-A1- 2 761 014

## Description

La présente invention concerne un volet d'obturation et plus particulièrement un volet d'obturation pour extrémité de conduit d'air, notamment pour gérer l'entrée d'air utilisé dans un système de chauffage ou de climatisation dans le domaine des véhicules automobiles.

Un véhicule automobile est couramment équipé d'une installation de chauffage, de ventilation et/ou de climatisation destinée à réguler les paramètres aérothermiques de l'air distribué dans l'habitacle, en particulier la température et la vitesse d'un flux d'air délivré par l'installation à l'intérieur de l'habitacle.

Dans ce type d'installation, l'air circule à l'intérieur de conduits et afin de gérer les différents flux d'air, des volets d'obturations desdits conduits sont installés. Généralement, les volets d'obturation sont positionnés à l'intérieur même des conduits et sont composés d'un axe de rotation, traversant l'intérieur du conduit, duquel s'étend une ou deux surfaces obturatrices qui, selon la rotation de l'axe de rotation, obstruent ledit conduit. On parle ici de volet de type papillon ou clapet. De tels volets d'obturations peuvent ainsi être placés au niveau des entrées d'air destiné à l'habitacle afin d'aider à la gestion d'entrée d'air au sein de l'habitacle.

D'autres types de volet d'obturation existent également avec une surface d'obturation déportée par rapport à l'axe de rotation. Par exemple, les volets dits volets tambours comportent une surface d'obturation déportée de l'axe de rotation et à chacune de ses extrémités une liaison pivot. Néanmoins, ce genre de volet tambour est volumineux et nécessite un boitier de système de chauffage ou de climatisation ayant une grande taille.

Afin de réduire la taille de ce genre de volet d'obturation à surface déportée par rapport à son axe de rotation, une solution connue est l'utilisation de volet dit glissière. Ce type de volet d'obturation comporte plus particulièrement un arbre de transmission comportant un ou plusieurs pignons et dont la rotation, par exemple manuelle ou via un moteur électrique, entraine le glissement au sein de glissières du volet d'obturation équipé d'une ou plusieurs crémaillères complémentaires des pignons. Cependant ce type de volet glissière n'est pas satisfaisant non plus du fait de sa complexité. De plus, un tel type de volet d'obturation implique généralement une cinématique complexe ce qui peut entraîner des risques de mise en travers ou de blocage dudit volet d'obturation. Le document EP 0 656 272 A1 divulgue un volet selon la préambule de la revendication 1. Un des buts de l'invention est donc de remédier au moins partiellement aux inconvénients de l'art antérieur et de proposer un volet d'obturation amélioré et peu encombrant.

La présente invention concerne donc un volet d'obturation pour système de chauffage ou de climatisation de véhicule automobile, ledit volet d'obturation comportant une surface d'obturation destinée à entrer en rotation autour d'un axe de rotation, ledit volet d'obturation étant destiné à se placer au sein d'un boitier de régulation de flux d'air, ledit volet d'obturation comportant :
- une première extrémité de la surface d'obturation, ladite première extrémité comportant une liaison pivot entre le volet d'obturation et l'axe de rotation,
- une seconde extrémité de la surface d'obturation, opposée à la première extrémité et comportant une liaison glissière apte à coopérer avec une paroi du boitier.

Le fait que le volet d'obturation comporte deux types de liaisons distinctes entre ses extrémités avec le boitier, permet un gain de place car seule une des extrémités du volet d'obturation est directement reliée à l'axe de rotation par une liaison pivot alors que l'autre extrémité est en liaison glissière moins volumineuse.

Selon l'invention, le volet d'obturation comprend un système de synchronisation du déplacement des première et seconde extrémités.

Grâce à ce système de synchronisation du déplacement des première et seconde extrémités, les risques de mise en travers et de blocage du volet d'obturation sont fortement réduits.

Selon l'invention, le système de synchronisation comporte un arbre de transmission parallèle à l'axe de rotation et s'étendant entre les première et seconde extrémités, ledit arbre de transmission comportant à ses extrémités des moyens d'entrainement pour assurer la synchronisation du déplacement des première et seconde extrémités de la surface d'obturation.

Selon un autre aspect de l'invention, la liaison pivot comporte un doigt de liaison confondu avec l'axe de rotation et fixé à la première extrémité par une projection latérale.

Selon un autre aspect de l'invention, la surface d'obturation comporte des lèvres d'étanchéité.

Selon un autre aspect de l'invention, la première extrémité de la surface d'obturation comporte une extension s'étendant vers l'extérieur parallèlement à ladite surface d'obturation.

La présente invention concerne également un boitier de régulation de flux d'air, comportant un volet d'obturation comme décrit ci-dessus.

Selon un aspect du boitier selon l'invention, les premier et second moyens d'entrainement sont des ensembles pignon/crémaillère, lesdits pignons étant portés par l'arbre de transmission.

Selon un autre aspect du boitier selon l'invention, l'arbre de transmission est porté par le volet d'obturation et les crémaillères sont portées par le boitier.

Selon un autre aspect du boitier selon l'invention, l'arbre de transmission est porté par le boitier et les crémaillères sont portées par le volet d'obturation.

Selon un aspect du boitier selon l'invention, la liaison glissière comporte au moins un doigt de guidage entrant en coopération avec une fente de glissement ayant une forme courbe dont le centre est confondu avec l'axe de rotation.

Selon un autre aspect du boitier selon l'invention, au moins un doigt de guidage est porté par la seconde extrémité du volet d'obturation et la fente de glissement par la paroi du boitier.

Selon un autre aspect du boitier selon l'invention, au moins un doigt de guidage est porté par la paroi du boitier et la fente de glissement par la seconde extrémité du volet d'obturation.

Selon un autre aspect du boitier selon l'invention, ce dernier comporte une surface complémentaire s'étendant parallèlement à la surface d'obturation lorsque le volet d'obturation est en position de blocage de l'air entrant dans le boitier et venant au contact de l'extension dudit volet d'obturation lorsque qu'il est en position de blocage de l'air entrant dans le boitier.

Le contact entre l'extension du volet d'obturation et la surface complémentaire du boitier lorsque le volet d'obturation est en position de blocage de l'air entrant dans le boitier permet une amélioration de l'étanchéité.

La présente invention concerne également un système de chauffage ou de climatisation de véhicule automobile comportant un boitier de régulation de flux d'air comme décrit ci-dessus.

D'autres caractéristiques et avantages de l'invention apparaîtront plus clairement à la lecture de la description suivante, donnée à titre d'exemple illustratif et non limitatif, et des dessins annexés parmi lesquels :
- les figures 1A et 1B montrent des représentations schématiques en perspective d'un volet d'obturation selon deux angles de vue distincts,
- les figures 2A et 2B montrent des représentations schématiques en perspective des parois intérieures du boitier du système de chauffage ou de climatisation,
- la figure 3 montre une représentation schématique éclatée d'un volet d'obturation et du boitier dans lequel il s'insère.

Sur les différentes figures, les éléments identiques portent les mêmes numéros de référence.

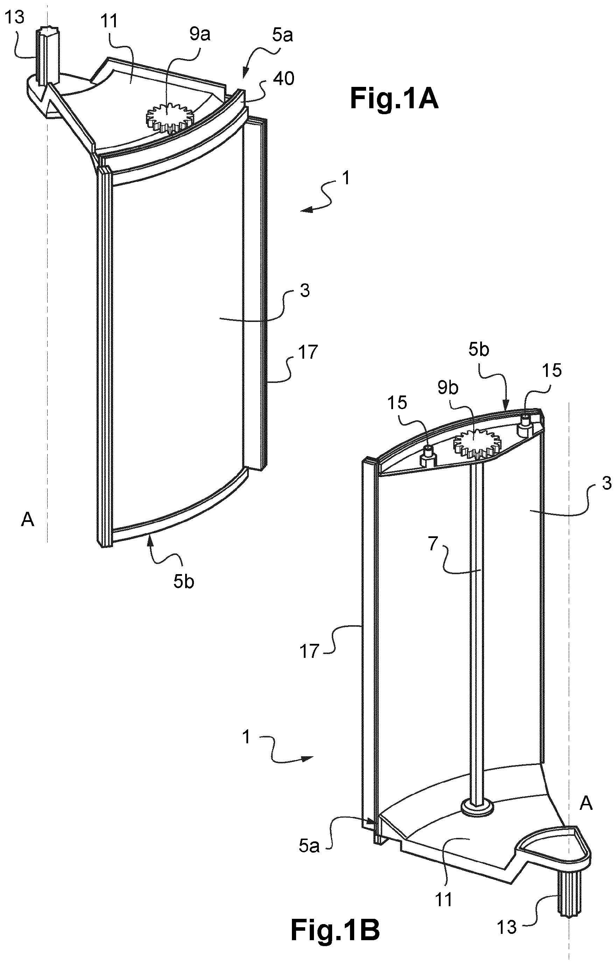

Les figures 1A et 1B montrent des représentations schématiques d'un volet d'obturation 1 selon deux angles de vue distincts.

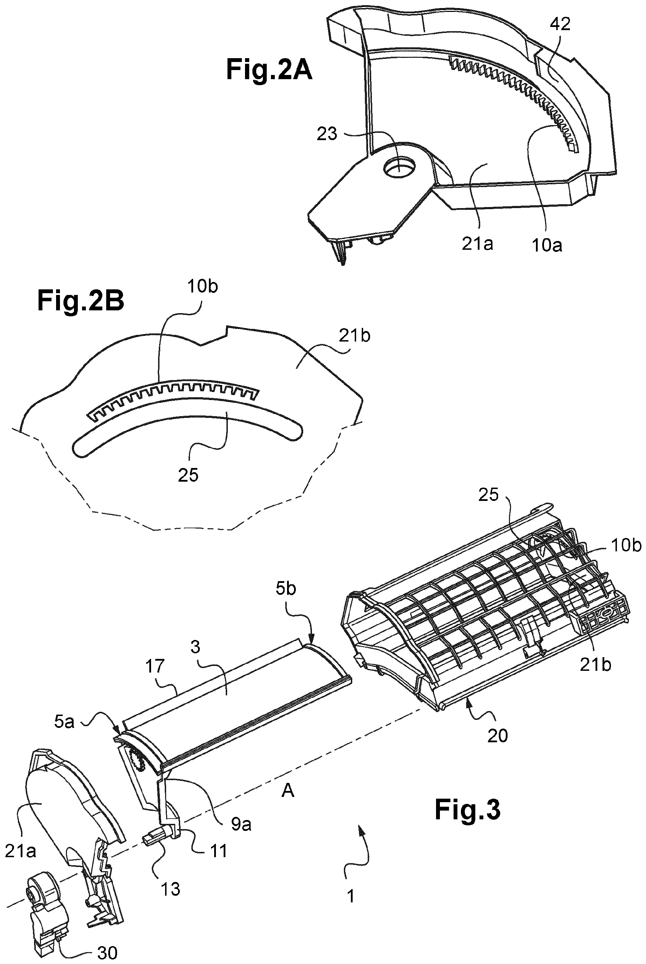

Le volet d'obturation 1 comporte notamment une surface d'obturation 3 destinée à se déplacer en rotation autour d'un axe de rotation A. La surface d'obturation 3, selon sa position, permet de bloquer ou de laisser passer un flux d'air au sein d'un système de chauffage ou de climatisation. Sur les figures 1a, 1b et 3, la surface d'obturation a une forme en arc de cercle dont le centre est confondu avec l'axe de rotation A.

Ce volet d'obturation 1 est destiné à se placer au sein d'un boitier 20 de régulation de flux d'air (visible sur la figure 3) formant une chambre dans laquelle circule le flux d'air.

Le volet d'obturation 1 comporte en outre :
- une liaison pivot avec l'axe de rotation A à une première extrémité 5a de sa surface obturatrice 3,
- une liaison glissière avec une paroi 21b du boitier 20 à une seconde extrémité 5b de sa surface obturatrice 3, ladite seconde extrémité 5b étant opposée à la première extrémité 5a, et
- un système de synchronisation du déplacement des première 5a et seconde 5b extrémités.

De part le fait d'avoir une liaison différente à chacune de ses extrémités 5a, 5b, le volet d'obturation 1 requiert un volume moins important pour être installé au sein du boitier 20 tout en évitant les problèmes de cinématiques tels que la mise en travers ou le blocage dudit volet d'obturation.

L'entrainement en rotation du volet d'obturation 1 peut être réalisé directement sur ce dernier au niveau de la liaison pivot, ce qui assure la fiabilité du volet d'obturation. L'entrainement du volet d'obturation 1 peut ainsi être réalisé par connexion du volet d'obturation 1 à un dispositif d'actionnement 30, par exemple manuel ou encore un moteur électrique 30 comme illustré à la figure 3. Ce dispositif d'actionnement 30 est couplé à un doigt de liaison 13 confondu avec l'axe de rotation A et relié à la première extrémité 5a au moyen d'une projection latérale 11.

La liaison glissière entre la seconde extrémité 5b et la paroi 21b du boitier 20 peut notamment comporter au moins un doigt de guidage 15 entrant en coopération avec une fente de glissement 25 (visible sur la figure 2b) ayant une forme courbe dont le centre est confondu avec l'axe de rotation A. Comme montré sur les figures 1b et 2b, l'au moins un doigt de guidage 15, au nombre de deux dans l'exemple présenté, peut être porté par la seconde extrémité 5b de la surface d'obturation 3 alors que la fente de glissement 25 est portée par la paroi 21b du boitier 20. Il est néanmoins tout à fait possible d'imaginer un mode de réalisation alternatif où l'au moins un doigt de guidage 15 est porté par la paroi 21b et où la fente de glissement 25 est portée par la seconde extrémité 5b.

Le boitier 20 de régulation de flux d'air peut notamment être un boitier de gestion d'entrée d'air au sein du système de chauffage ou de climatisation du véhicule automobile. Selon la position du volet d'obturation 1, le passage d'air provenant de l'extérieur et / ou provenant de l'habitacle (aussi appelé air recirculé) au sein du système de chauffage ou de climatisation au travers du boitier 20 sera alors réglé pour favoriser soit l'entrée l'air extérieur soit l'entrée d'air recirculé.

Le système de synchronisation du déplacement des première 5a et seconde 5b extrémités a pour but de synchroniser les déplacements de la première extrémité 5a, entrainée par le dispositif d'actionnement 30, avec ceux de la seconde extrémité 5b. Par synchronisation des déplacements, on entend que les deux extrémités 5a et 5b se déplacent dans le même sens, en même temps et à la même vitesse et ce afin d'éviter que la surface obturatrice 3 ne se mette de travers dans le boitier 20 et se bloque. Le système de synchronisation peut ainsi comporter un arbre de transmission 7 parallèle à l'axe de rotation A et s'étendant entre les première 5a et second extrémités 5b.

L'arbre de transmission 7 comporte à ses extrémités des moyens d'entrainement pour assurer la synchronisation du déplacement des première 5a et seconde 5b extrémités de la surface d'obturation 3. Il comporte ainsi un premier moyen d'entrainement 9a permettant l'entrainement de l'arbre de transmission 7 via le déplacement de la première extrémité 5a du fait de la rotation du volet d'obturation 1 autour de l'axe de rotation A. L'arbre de transmission 7 comporte un second moyen d'entrainement 9b permettant la synchronisation de la seconde extrémité 5b avec la première extrémité 5a, c'est-à-dire que le déplacement de ladite première extrémité 5a du fait de la rotation du volet d'obturation 1 autour de l'axe de rotation A est directement transmis via l'arbre de transmission 7 à la seconde extrémité 5b.

Comme illustré sur les figures 1A à 3, les premier et second moyens d'entrainement peuvent être des ensembles pignon/crémaillère, lesdits pignons 9a, 9b étant portés par les extrémités de l'arbre de transmission 7. Selon un premier mode de réalisation illustré sur les différentes figures, l'arbre de transmission 7 est directement porté par le volet d'obturation 1 alors que les crémaillères 10a et 10b sont portées par le boitier 20.

L'arbre de transmission 7 est alors déporté de l'axe de rotation A et positionné proche de la surface d'obturation 3. Cela permet notamment une réduction de l'encombrement au niveau de la seconde extrémité 5b car tout les éléments, c'est-à-dire la surface d'obturation 3, la liaison glissière et l'axe de transmission 7, sont tous proches les uns des autres et déportés de l'axe de rotation A.

Ainsi, lorsque le volet d'obturation 1 est mis en rotation au niveau de la liaison pivot au moyen du dispositif d'actionnement 30, la rotation est transmise à l'arbre de transmission 7 par le premier pignon 9a qui est entrainé par son déplacement par rapport à la première crémaillère 10a qui est ici fixée sur un capot 21a, comme montré sur la figure 2A. Ce capot 21a vient recouvrir la première extrémité 5a et refermer le boitier 20 comme le montre la figure 3. Il peut également comporter un orifice 23 permettant le passage du doigt de liaison 13.

L'arbre de transmission 7 retransmet le déplacement à la seconde extrémité 5b où le second pignon 9b s'engrène dans la seconde crémaillère 10b fixée du la paroi 21b du boitier 20, comme montré sur la figure 2B.

La seconde extrémité 5b est donc mobile au niveau de sa liaison glissière avec le boitier 20 de par la rigidité de la surface d'obturation 3 mais également par la rotation de l'arbre de transmission 7 qui permet de synchroniser les deux extrémités 5a, 5b.

Selon un second mode de réalisation non représenté, l'arbre de transmission 7 est porté par le boitier 20 et s'étend entre le capot 21a et la paroi 21b où sont situés les pignons 9a, 9b. Dans ce mode de réalisation, les crémaillères 10a, 10b sont quant à elles portées par le volet d'obturation 1 au niveau de ses extrémités 5a, 5b.

Afin d'assurer une bonne étanchéité entre la surface d'obturation 3 et le boitier 20, le volet d'obturation 1 peut comporter des lèvres d'étanchéité 17 sur la périphérie de la surface d'obturation 3.

Toujours dans l'optique d'améliorer l'étanchéité et plus particulièrement lorsque le volet d'obturation 1 bloque l'arrivée d'air, la première extrémité 5a de la surface d'obturation 3 peut comporter une extension 40 s'étendant vers l'extérieur parallèlement à la surface d'obturation 3. Cette extension 40 est destinée à entrer en contact d'une surface complémentaire 42 située sur le boitier 20, plus particulièrement sur le capot 21a, et s'étendant elle aussi parallèlement à la surface d'obturation 3 lorsque cette dernière est en position de blocage de l'air entrant dans le boitier 20. Ainsi lorsque le volet d'obturation 1 est en position de blocage de l'air entrant dans le boitier 20, l'extension 40 et la surface complémentaire 42 sont en contact l'une avec l'autre améliorant l'étanchéité du système de chauffage ou de climatisation au niveau du boitier 20.

Ainsi, on voit bien que du fait que le volet d'obturation 1 selon l'invention comporte deux types de liaisons distinctes entre ses extrémités 5a, 5b avec le boitier 20, cela permet un gain de place car seule une des extrémités du volet d'obturation est directement reliée à l'axe de rotation par une liaison pivot alors que l'autre extrémité est en liaison glissière moins volumineuse. De plus grâce au système de synchronisation 7,9a,9b,10a,10b du déplacement des première 5a et seconde 5b extrémités les risques de mise en travers et de blocage du volet d'obturation 1 sont fortement réduits.

## Revendications

1. Volet d'obturation (1) pour système de chauffage ou de climatisation de véhicule automobile, ledit volet d'obturation (1) comportant une surface d'obturation (3) destinée à entrer en rotation autour d'un axe de rotation (A), ledit volet d'obturation (1) étant destiné à se placer au sein d'un boitier (20) de régulation de flux d'air, le volet comportant:
- une première extrémité (5a) de la surface d'obturation (3), ladite première extrémité (5a) comportant une liaison pivot entre le volet d'obturation (1) et l'axe de rotation (A),
- une seconde extrémité (5b) de la surface d'obturation (3), opposée à la première extrémité (5a) et comportant une liaison glissière apte à coopérer avec une paroi (21b) du boitier (20),
ledit volet comprenant un système de synchronisation (7,9a,9b,10a,10b) du déplacement des première (5a) et seconde (5b) extrémités,
**caractérisé en ce que** le système de synchronisation (7,9a,9b,10a,10b) comporte un arbre de transmission (7) parallèle à l'axe de rotation (A) et s'étendant entre les première (5a) et seconde (5b) extrémités, ledit arbre de transmission (7) comportant à ses extrémités des moyens d'entrainement pour assurer la synchronisation du déplacement des première (5a) et seconde (5b) extrémités de la surface d'obturation (3).

2. Volet d'obturation (1) selon la revendication précédente, **caractérisé en ce que** la liaison pivot comporte un doigt de liaison (13) confondu avec l'axe de rotation (A) et fixé à la première extrémité (5a) par une projection latérale (11).

3. Volet d'obturation (1) selon l'une des revendications précédentes, **caractérisé en ce que** la surface d'obturation (3) comporte des lèvres d'étanchéité (17).

4. Volet d'obturation (1) selon l'une des revendications précédentes, **caractérisé en ce que** la première extrémité (5a) de la surface d'obturation (3) comporte une extension (40) s'étendant vers l'extérieur parallèlement à ladite surface d'obturation (3).

5. Boitier (20) de régulation de flux d'air, **caractérisé en ce qu'**il comporte un volet d'obturation selon l'une des revendications 1 à 4.

6. Boitier (20) de régulation de flux d'air selon la revendication précédente, **caractérisé en ce que** les premier et second moyens d'entrainement sont des ensembles pignon (9a,9b)/crémaillère (10a,10b), lesdits pignons (9a,9b) étant portés par l'arbre de transmission (7).

7. Boitier (20) de régulation de flux d'air selon la revendication 5, **caractérisé en ce que** l'arbre de transmission (7) est porté par le volet d'obturation (1) et que les crémaillères (10a,10b) sont portées par le boitier (20).

8. Boitier (20) de régulation de flux d'air selon la revendication 5, **caractérisé en ce que** l'arbre de transmission (7) est porté par le boitier (20) et que les crémaillères (10a,10b) sont portées par le volet d'obturation (1).

9. Boitier (20) de régulation de flux d'air selon l'une des revendications 5 à 8, **caractérisé en ce que** la liaison glissière comporte au moins un doigt de guidage (15) entrant en coopération avec une fente de glissement (25) ayant une forme courbe dont le centre est confondu avec l'axe de rotation (A).

10. Boitier (20) de régulation de flux d'air selon la revendication précédente, **caractérisé en ce que** l'au moins un doigt de guidage (15) est porté par la seconde extrémité (5b) du volet d'obturation (1) et la fente de glissement (25) par la paroi (21b) du boitier (20).

11. Boitier (20) de régulation de flux d'air selon la revendication précédente, **caractérisé en ce que** l'au moins un doigt de guidage (15) est porté par la paroi (21b) du boitier (20) et la fente de glissement (25) par la seconde extrémité (5b) du volet d'obturation (1).

12. Boitier (20) de régulation de flux d'air selon l'une des revendications 5 à 11, **caractérisé en ce que** ledit boitier (20) comporte une surface complémentaire (42) s'étendant parallèlement à la surface d'obturation (3) lorsque le volet d'obturation (1) est en position de blocage de l'air entrant dans le boitier (20) et venant au contact de l'extension (40) dudit volet d'obturation (1) lorsque qu'il est en position de blocage de l'air entrant dans le boitier (20).

13. Système de chauffage ou de climatisation de véhicule automobile **caractérisé en ce qu'**il comporte un boitier (20) de régulation de flux d'air selon l'une des revendications 5 à 12.

## Patentansprüche

1. Verschlussklappe (1) für ein Heiz- oder Klimatisierungssystem eines Kraftfahrzeugs, wobei die Verschlussklappe (1) eine Verschlussfläche (3) aufweist, die dazu bestimmt ist, sich um eine Drehachse (A) zu drehen, wobei die Verschlussklappe (1) dazu bestimmt ist, innerhalb eines Gehäuses (20) zur Regelung eines Luftstroms angeordnet zu werden, wobei die Klappe aufweist:
- ein erstes Ende (5a) der Verschlussfläche (3), wobei das erste Ende (5a) eine Schwenkverbindung zwischen der Verschlussklappe (1) und der Drehachse (A) aufweist,
- ein zweites Ende (5b) der Verschlussfläche (3), das dem ersten Ende (5a) gegenüberliegt und eine Gleitverbindung aufweist, die geeignet ist, mit einer Wand (21b) des Gehäuses (20) zusammenzuwirken,
wobei die Klappe ein System zur Synchronisation (7, 9a, 9b, 10a, 10b) der Verlagerung des ersten (5a) und des zweiten (5b) Endes umfasst,
**dadurch gekennzeichnet, dass** das System zur Synchronisation (7, 9a, 9b, 10a, 10b) eine Übertragungswelle (7) aufweist, die zu der Drehachse (A) parallel ist und sich zwischen dem ersten (5a) und zweiten (5b) Ende erstreckt, wobei die Übertragungswelle (7) an ihren Enden Antriebsmittel zum Sicherstellen der Synchronisation der Verlagerung des ersten (5a) und des zweiten (5b) Endes der Verschlussfläche (3) aufweist.

2. Verschlussklappe (1) nach dem vorhergehenden Anspruch, **dadurch gekennzeichnet, dass** die Schwenkverbindung einen Verbindungszapfen (13) aufweist, der mit der Drehachse (A) zusammenfällt und an dem ersten Ende (5a) durch einen seitlichen Vorsprung (11) befestigt ist.

3. Verschlussklappe (1) nach einem der vorhergehenden Ansprüche, **dadurch gekennzeichnet, dass** die Verschlussfläche (3) Dichtlippen (17) aufweist.

4. Verschlussklappe (1) nach einem der vorhergehenden Ansprüche, **dadurch gekennzeichnet, dass** das erste Ende (5a) der Verschlussfläche (3) eine Verlängerung (40) aufweist, die sich parallel zu der Verschlussfläche (3) nach außen erstreckt.

5. Gehäuse (20) zur Regelung eines Luftstroms, **dadurch gekennzeichnet, dass** es eine Verschlussklappe nach einem der Ansprüche 1 bis 4 aufweist.

6. Gehäuse (20) zur Regelung eines Luftstroms nach dem vorhergehenden Anspruch, **dadurch gekennzeichnet, dass** die ersten und zweiten Antriebsmittel Anordnungen aus Ritzel (9a, 9b) und Zahnstange (10a, 10b) sind, wobei die Ritzel (9a, 9b) von der Übertragungswelle (7) getragen werden.

7. Gehäuse (20) zur Regelung eines Luftstroms nach Anspruch 5, **dadurch gekennzeichnet, dass** die Übertragungswelle (7) von der Verschlussklappe (1) getragen wird und dass die Zahnstangen (10a, 10b) von dem Gehäuse (20) getragen werden.

8. Gehäuse (20) zur Regelung eines Luftstroms nach Anspruch 5, **dadurch gekennzeichnet, dass** die Übertragungswelle (7) von dem Gehäuse (20) getragen wird und dass die Zahnstangen (10a, 10b) von der Verschlussklappe (1) getragen werden.

9. Gehäuse (20) zur Regelung eines Luftstroms nach einem der Ansprüche 5 bis 8, **dadurch gekennzeichnet, dass** die Gleitverbindung wenigstens einen Führungszapfen (15) aufweist, der mit einem Gleitschlitz (25) in Wirkverbindung tritt, welcher eine gekrümmte Form aufweist, deren Mittelpunkt mit der Drehachse (A) zusammenfällt.

10. Gehäuse (20) zur Regelung eines Luftstroms nach dem vorhergehenden Anspruch, **dadurch gekennzeichnet, dass** der wenigstens eine Führungszapfen (15) von dem zweiten Ende (5b) der Verschlussklappe (1) getragen wird, und der Gleitschlitz (25) von der Wand (21b) des Gehäuses (20) .

11. Gehäuse (20) zur Regelung eines Luftstroms nach dem vorhergehenden Anspruch, **dadurch gekennzeichnet, dass** der wenigstens eine Führungszapfen (15) von der Wand (21b) des Gehäuses (20) getragen wird, und der Gleitschlitz (25) von dem zweiten Ende (5b) der Verschlussklappe (1).

12. Gehäuse (20) zur Regelung eines Luftstroms nach einem der Ansprüche 5 bis 11, **dadurch gekennzeichnet, dass** das Gehäuse (20) eine komplementäre Fläche (42) aufweist, die sich parallel zu der Verschlussfläche (3) erstreckt, wenn sich die Verschlussklappe (1) in der Position der Blockierung der in das Gehäuse (20) eintretenden Luft befindet, und mit der Verlängerung (40) der Verschlussklappe (1) in Kontakt kommt, wenn sie sich in der Position der Blockierung der in das Gehäuse (20) eintretenden Luft befindet.

13. Heiz- oder Klimatisierungssystem eines Kraftfahrzeugs, **dadurch gekennzeichnet, dass** es ein Gehäuse (20) zur Regelung eines Luftstroms nach einem der Ansprüche 5 bis 12 aufweist.

## Claims

1. Shutter (1) for a heating or air-conditioning system for a motor vehicle, said shutter (1) comprising a shutting surface (3) intended to enter into rotation about an axis of rotation (A), said shutter (1) being intended to be placed within an airflow regulation housing (20), the shutter comprising:
- a first end (5a) of the shutting surface (3), said first end (5a) comprising a pivot link between the shutter (1) and the axis of rotation (A),
- a second end (5b) of the shutting surface (3), opposite the first end (5a) and comprising a runner link capable of cooperating with a wall (21b) of the housing (20),
said shutter comprising a system (7, 9a, 9b, 10a, 10b) for synchronizing the displacement of the first (5a) and second (5b) ends,
**characterized in that** the synchronization system (7, 9a, 9b, 10a, 10b) comprises a transmission shaft (7) parallel to the axis of rotation (A) and extending between the first (5a) and second (5b) ends, said transmission shaft (7) comprising, at its ends, driving means to ensure the synchronization of the displacement of the first (5a) and second (5b) ends of the shutting surface (3) .

2. Shutter (1) according to the preceding claim, **characterized in that** the pivot link comprises a link finger (13) coinciding with the axis of rotation (A) and fixed to the first end (5a) by a lateral projection (11).

3. Shutter (1) according to one of the preceding claims, **characterized in that** the shutting surface (3) comprises sealing lips (17).

4. Shutter (1) according to one of the preceding claims, **characterized in that** the first end (5a) of the shutting surface (3) comprises an extension (40) extending outward parallel to said shutting surface (3).

5. Airflow regulation housing (20), **characterized in that** it comprises a shutter according to one of Claims 1 to 4.

6. Airflow regulation housing (20) according to the preceding claim, **characterized in that** the first and second driving means are pinion (9a, 9b)/rack (10a, 10b) assemblies, said pinions (9a, 9b) being borne by the transmission shaft (7).

7. Airflow regulation housing (20) according to Claim 5, **characterized in that** the transmission shaft (7) is borne by the shutter (1) and the racks (10a, 10b) are borne by the housing (20).

8. Airflow regulation housing (20) according to Claim 5, **characterized in that** the transmission shaft (7) is borne by the housing (20) and that the racks (10a, 10b) are borne by the shutter (1).

9. Airflow regulation housing (20) according to one of Claims 5 to 8, **characterized in that** the runner link comprises at least one guiding finger (15) entering into cooperation with a slide slot (25) having a curve form whose centre coincides with the axis of rotation (A).

10. Airflow regulation housing (20) according to the preceding claim, **characterized in that** the at least one guiding finger (15) is borne by the second end (5b) of the shutter (1) and the slide slot (25) is borne by the wall (21b) of the housing (20).

11. Airflow regulation housing (20) according to the preceding claim, **characterized in that** the at least one guiding finger (15) is borne by the wall (21b) of the housing (20) and the slide slot (25) is borne by the second end (5b) of the shutter (1) .

12. Airflow regulation housing (20) according to one of Claims 5 to 11, **characterized in that** said housing (20) comprises a complementary surface (42) extending parallel to the shutting surface (3) when the shutter (1) is in the position blocking air entering into the housing (20) and coming into contact with the extension (40) of said shutter (1) when it is in the position blocking air entering into the housing (20).

13. Heating or air-conditioning system of a motor vehicle, **characterized in that** it comprises an airflow regulation housing (20) according to one of Claims 5 to 12.
